# EUROPÄISCHE PATENTANMELDUNG

(11) **EP 1 645 895 A1**
(43) Veröffentlichungstag der Anmeldung: **12.04.2006**
(21) Anmeldenummer: 05021210.9
(22) Anmeldetag: 28.09.2005
(51) Int. Cl.: G02B 6/04

(54) **Verfahren zur Herstellung eines Abschlusses eines Lichtleitfaserbündels**

(30) Priorität: 05.10.2004 DE 102004048741
(71) Anmelder: Schott AG, 55122 Mainz (DE)
(72) Erfinder: Wied, Achim, 55599 Siefersheim (DE); Henrich, Thomas, 61449 Steinbach (DE); Meinl, Jürgen, 65329 Hohenstein-Holzhausen (DE); Weingätner, Thomas, 55435 Gau-Algesheim (DE)
(74) Vertreter: Schäfer, Horst

(57) **Zusammenfassung**

Mit der Erfindung wird ein Verfahren zur Herstellung eines Abschlusses eines Lichtleitfaserbündels zur Verfügung gestellt, wobei das Lichtleitfaserbündel endseitig in einer Crimphülse zusammengefasst und die Crimphülse mit dem Ende des Lichtleitfaserbündels in eine Pressvorrichtung mit einem an die Endgeometrie des Lichtleitfaserbündels angepassten Crimpwerkzeug eingeführt wird. Des Weiteren ist von der Erfindung ein Lichtleiter umfasst, bestehend aus einem Lichtleitfaserbündel und einer Crimphülse, welche endseitig einen nach dem erfindungsgemäßen Verfahren hergestellten Abschluss bilden.

Vorteilhafte Wirkungen werden mit dem Verfahren insbesondere dadurch erreicht, dass die Crimphülse mit einer vorgegebenen Crimpkraft vom Crimpwerkzeug über das Ende des Lichtleitfäserbündels stauchgeformt wird und dass die Crimpkraft während des Stauchformvorganges in Abhängigkeit des Materials der Crimphülse geregelt wird. Dabei wird der Stauchformvorgang mittels einer Regeleinheit weg-, zeit- und/oder kraftabhängig begonnen, durchgeführt und beendet.

## Beschreibung

Die Erfindung betrifft ein Verfahren zur Herstellung eines Abschlusses eines Lichtleitfaserbündels, wobei das Lichtleitfaserbündel endseitig in einer Crimphülse zusammengefasst und die Crimphülse mit dem Ende des Lichtleitfaserbündels in eine Pressvorrichtung mit einem an die Endgeometrie des Lichtleitfaserbündels angepassten Crimpwerkzeug eingeführt wird. Des Weiteren ist von der Erfindung ein Lichtleiter umfasst, bestehend aus einem Lichtleitfaserbündel und einer Crimphülse, welche endseitig einen nach dem erfindungsgemäßen Verfahren hergestellten Abschluss bilden.
Zur Lichtübertragung werden häufig flexible Lichtleiter mit wenigstens einem Lichtleitfaserbündel verwendet, welche aus einer, Vielzahl von Lichtleitfasern bestehen. Bei derartigen Lichtleitfaserbündeln sind die Lichtleitfasern üblicherweise an zumindest einem gemeinsamen Ende zusammengefasst.
Für das Zusammenfassen der Lichtleitfasern an deren gemeinsamen Ende sind im Stand der Technik bereits Verfahren vorbekannt. So werden Lichtleitfasern durch Verkleben miteinander und mit einer aufgeschobenen Hülse verbunden. Dieses weit verbreitete Verfahren hat die Nachteile, dass das verwendete Kleberstoffmaterial in der Regel die Temperaturbeständigkeit des Lichtleitfaserbündels begrenzt. Darüber hinaus ist die Packungsdichte der Lichtleitfasern in der Hülse und somit auch die optische Kapazität der so hergestellten Lichtleiter beziehungsweise der Lichtleitfaserfaserbündel beschränkt. Schließlich weist die an den Enden angebrachte Verklebung in der Regel auch keine ausreichende chemische Beständigkeit auf, so dass derartige Lichtleiter beziehungsweise der Lichtleitfaserfaserbündel nur beschränkt einsetzbar sind.
Um diese Nachteile zu überwinden sind im Stand der Technik Verfahren bekannt, bei denen die Einzeifasern in einer gemeinsamen Hülse untereinander und mit der Hülse heißverschmolzen werden. Aus der DE-26 30 730 A1 ist ein Verfahren bekannt, bei welchen eine Hülse wärmeweich auf das Lichtleitfaserbündel aufgepresst wird. Hierbei werden die Einzelfasern hexagonal verformt.
Aus der DE-196 04 678 A1 ist ferner ein Verfahren bekannt, bei dem die Lichtleiteinzelfasem an den Enden des Lichtleitfaserbündels miteinander verschmolzen werden. Dazu wird das gesamte Lichtleitfaserbündel zum Verschmelzen des gemeinsamen Endes in eine Rotationsbewegung versetzt, was zu großen Handhabungsschwierigkeiten führt, womit erhebliche Einschränkungen bei der Herstellung von komplexeren bzw. größeren Bauteilen verbunden sind. Dabei werden die Lichtleitfaserenden sowie die Presswerkzeuge in einem elektrisch beheizten Ofen auf Umformtemperatur gebracht. Bei größeren Bauteildurchmessern benötigt der Verschmelzungsprozess deswegen mehrere Stunden. Eine definierte Temperatureinstellung der zu verschmelzenden Einzelfasern ist bedingt durch die notwendige Bauform des Ofens bei diesen Verfahren nicht möglich.

Aus der DE 198 55 958 A1 ist ferner ein Verfahren bekannt, bei welchem die losen Einzelfasern provisorisch zu einem runden und dichtgepackten Bündel zusammengehalten werden. Dieses Lichtleitfaserbündel wird mit Passsitz in die metallische Hülse eingeschoben. Die Hülse weist dabei bei der Umformtemperatur des Glases eine ausreichende Wärmefestigkeit auf.

Die Hülse wird dann in eine Spannvorrichtung zum Fixieren des Lichtleitfaserbündels in axialer und radialer Richtung eingelegt und zusammen mit den eingeschobenen Lichtleitfaserenden auf Umformtemperatur gebracht.

Anschließend wird das aufgeheizte Ende des eingespannten Lichtleitfaserbündels unter Umformen der Einzelfasern zu einer hexagonalen Packung verpresst, wobei die metallische Hülse an diese Packung angepresst wird, ohne dass es zu einer Anglasung zwischen dem verschmolzenen Lichtleitfaserbündel und der metallischen Hülse kommt. Nach dem Abkühlen wird das Lichtleitfaserbündel aus der Spannvorrichtung entfernt.

Durch die Beheizung der Lichtleitfaserenden wird ein reproduzierbarer Umformungsprozess gewährleistet. Dadurch kommt es zu einer nahezu hexagonalen Verschmelzung des gesamten Bündeldurchmessers an den Enden, auch bei verhältnismäßig großen Durchmessem bis etwa 30 mm. Dies bewirkt, dass die Fasern im verschmolzenen Bereich parallel zueinander liegen und dass Zentrizität des verschmolzenen Bereiches erreicht wird, was insgesamt zu einer verbesserten Abstrahlcharakteristik des Lichtleitfaserbündels führt.

Nach dem Umformungsprozess kann die äußere Metallhülse von den miteinander verschmolzenen Lichtleitfaserbündel wieder entfernt werden, da diese nicht miteinander verbunden sind. Es ist mithin möglich, dass die Lichtleitfaserbündel mit verfahrensgemäße zusammengeschmolzenen Enden ohne Metallhülse verwendet werden.

Nachteile der vorbeschriebenen bekannten Verfahren sind vor allem in den erheblichen Aufwendungen für die Vorrichtungen sowie für die Herstellung zu sehen. Insbesondere ist für die Durchführung große Aufmerksamkeit und Erfahrung erforderlich. ohne die es bei diesen Verfahren schnell zu Überhitzungen uns somit zur Zerstörung der Hülse, beziehungsweise der Klebstoffmaterialien oder bei Überhitzung zu unerwünschten Veränderungen der optischen Eigenschaften der Lichtleitfaserenden mit ihren Lichtaustrittsflächen kommen kann.

Darüber hinaus ist die Herstellung von Lichtleitfaserbündeln mit den bekannten Verfahren und Vorrichtungen mit erheblichem Kostenaufwand verbunden, da das Aufheizen und Abkühlen der Enden energie- und zeitaufwendig ist.

Aufgabe der Erfindung ist es daher, ein Verfahren zur Verfügung zu stellen, welches die Nachteile des Standes der Technik vermeidet beziehungsweise vermindert, ohne auf die wesentlichen Vorteile zu verzichten, welche mit diesen bekannten Verfahren bereits erreicht worden sind. Insbesondere ist es Aufgabe der Erfindung ein Verfahren zur Verfügung zu stellen, welches für eine serienmäßige Produktion von Lichtleitfaserbündeln geeignet ist und ökonomisch wie ökologisch nachhaltig betrieben werden kann. Der Erfindung liegt weiter die Aufgabe zugrunde, die eingangs bezeichnete Verfahren so zu verbessern, dass auf einfache Weise und mit einfachen Mitteln ein Lichtleitfaserbündel mit verbesserten optischen Eigenschaften und einem breiteren Einsatzbereich herstellbar ist

Eine Lösung der erfindungsgemäßen Aufgabe wird durch ein Verfahren mit den kennzeichnenden Merkmalen des Anspruchs 1 bereitgestellt. Erfindungsgemäße Weiterbildungen des Verfahrens werden durch die nachgeordneten Unteransprüche realisiert.

Vorteile der erfindungsgemäßen Lösung gegenüber bestehenden Verfahren werden insbesondere dadurch erreicht, dass die Crimphülse mit einer vorgegebenen Crimpkraft vom Crimpwerkzeug über das Ende des Lichtleüfaserbündels stauchgeformt wird und dass die Crimpkraft während des Stauchformvorganges in Abhängigkeit des Materials der Crimphalse geregelt wird.

Eine erfindungsgemäße Weiterbildung des Verfahrens wird dadurch bereitgestellt, dass der Stauchformvorgang mittels einer Regeleinheit weg-, zeit- und/oder kraftabhängig begonnen, durchgeführt und beendet wird.

Die Anwendung einer für die Crimphülsen spezifischen Umformkraft führt in vorteilhafter Weise dazu, dass Toleranzen im Durchmesser des Glasfaserbündels automatisch ausgeglichen werden können. Dabei werden die Lichtleitfaserenden in der Crimphülse zusammengefasst, ohne dass sie dabei aufgeheizt werden müssen. Die Crimphülsen werden bei diesem Vorgang stauchgeformt, so dass nach dem Stauchformen die Lichtleitfaserenden in der Crimphülse in einer durch das Crimpwerkzeug vorgegebenen geometrischen Form eingespannt bleiben. Hierdurch wird der weitere Vorteil erreicht, dass die Prozesszeiten zur Herstellung eines Lichtleitfaserendes klein, vorzugsweise im Bereich von Sekunden, bleiben. Somit ist es möglich ohne großen Energie-, Zeitaufwand und mit geringem Kostenaufwand eine große Anzahl von Lichtleitfaserbündeln mit zusammengefassten Enden serienmäßig herzustellen.

Dabei bleibt es möglich Lichdeitfaserbündel mit großen Durchmessern endseitig zusammenzufassen und unterschiedliche Querschnitte während oder nach der Verformung zu realisieren. Es können somit alle gewünschten Querschnitte an den Lichtleitfaserenden hergestellt werden. Beispielsweise können mehrkantige Abschlüsse an den Lichtleitfaserbündeln stauchgeformt werden, wie zum Beispiel vier- fünf-, oder sechskantige Abschlüsse.

Dadurch, dass auf eine zeit- und kostenintensiven Aufheiz- und Abkühlphase verzichtet werden kann, werden an den Lichtleitfaserenden thermische Spannungen vermieden. Außerdem sind unterschiedliche Hülsenmaterialien einsetzbar und eine Vorbehandlung der Crimphülse oder Lichtleitfaserenden vor der Stauchformung mit weiteren Materialien ist zusätzlich nicht erforderlich. Es kann somit auch auf zusätzlichen Hilfs- oder Betriebsstoffe verzichtet werden, ohne dass es zu Qualitätseinbußen gegenüber bekannten Ver fahren kommt.

Da mit der Erfindung in vorteilhafter Weise auch auf aufwendige Klebeverfahren beziehungsweise dementsprechend auf Klebstoffe verzichtet werden kann, wird eine ausreichend hohe Qualität der Lichtleitfaserbündel erreicht, ohne dass eine Vorbehandlung der Crimphülse, der Lichtleitfaserenden oder der Werkzeuge erforderlich ist. Es werden zeitaufwendige Verfahrensschritte aber auch Vorrichtungsmittel zur Bereitstellung von Klebstoffen sowie für die Aushärtung der Klebstoffen an verklebten Lichtleitfaserenden vermieden. So kann vollständig auf eine thermische oder UV-Licht Nachbehandlung verzichtet werden. Darüber hinaus fallen Mittel und deren Pflege und Wartung für die Dosierung des Klebstoffes weg. Dadurch ist es weiterhin möglich Lichtleitfaserbündel ohne Verschmutzung durch Klebstoff herzustellen, wodurch weitere Nachbearbeitungsschritte entfallen. Somit können auch gegenüber den bekannten Klebeverfahren Kosten und Verfahrenszeit vermindert werden.

Das erfindungsgemäße Verfahren kann in einfacher, kostengünstiger und energiesparender weise für die serienmäßige Herstellung von Lichtleitfaserbündel mit zusammengefassten Enden verwendet werden.

Eine erfinderische Weiterbildung des Verfahrens wird dadurch erreicht, dass die Crimphülse zu Beginn des Stauchformvorganges mit einer Crimpkraft Ober der erforderlichen Verformkraft einer leeren Crimphülse und unterhalb der Bruchbelastung der einzelnen Lichtleitfasern am Lichtiedaserbündel gestaucht wird.

In vorteilhafter Weise wird somit gewährleistet, dass die Lichtteitfaserenden schonend zusammengefasst werden. An den Lichtleitfaserenden können so Faserbruch und Beschädigungen der Faserendflächen vermieden werden.

Dies wird erfindungsgemäß dadurch erreicht, dass die aufzubringende Crimpkraft mit elektronischen, mechanischen, pneumatischen und/oder hydraulischen Mitteln ermittelt, eingestellt und geregelt wird.

Die Kraftregelung während des Prozesses kann sowohl mit mechanischen Mitteln umgesetzt werden, z. B. durch die Vorspannung von Federelementen, welche bei Überschreiten eines einstellbaren Kraftwertes keine weitere Kraftsteigerung mehr zulassen. Wobei eine mechanische Hebelpresse die Crimphülse entsprechend den Vorgaben verformt. Als einstellbares Federelement dient hierbei ein drehmomentabhängig einstellbarer Hebelarm, welcher manuell, halb- oder vollautomatisch betätigbar ist und der bei Erreichen einer vorgegebenen Hebelkraft die Kraftübertragung unterbricht. Darüber hinaus sind von der Erfindung Lösungen umfasst, bei welchen mittels elektronischen, pneumatischen beziehungsweise hydraulischen Mitteln die Weg-, Zeit und/oder Kraftsteuerung realisiert werden.

Wichtig an dem erfindungsgemäßen Verfahren ist, dass die Crimpkraft an der Crimphülse bestimmte Werte nicht über- bzw. unterschreitet und dass die Crimpkraft während des Prozesses direkt oder indirekt erfasst wird und den Prozessverlauf als wesentliche Steuergröße aktiv beeinflusst.

Dabei können die plastischen Eigenschaften des Materials der Crimphülse von einer Regeleinheit erfasst werden. bevor die Crimphülse an den Lichtleitfaserenden zur Anlage kommen. Zusammen mit vorgegebenen Werten für die Bruchfestigkeit des Lichtleitfasermaterials Ist es somit möglich die Crimpkraft zu ermitteln und beim Stauchvorgang anzuwenden. Dies ermöglicht eine flexible Handhabung bei der Auswahl von Crimphülsen.

Während eines laufenden, serienmäßig ablaufenden Herstellungsprozesses ist es somit möglich Crimphülsen mit unterschiedlichen Materialien zu verwenden, ohne dass der Herstellungsprozess für Einstellarbeiten unterbrochen werden muss. Der Herstellungsprozess kann somit weitgehend automatisiert erfolgen.

Erfindungsgemäß ist hierzu vorgesehen, dass die zur Ermittlung der aufzubringenden und/oder bereits erreichten Crimpkraft erforderlichen Parameter durch Kraftsensoren erfasst werden.

In vorteilhafter Weise ist es mit dem erfindungsgemäßen Verfahren möglich, dass die Kraftsensoren die Parameter mittelbar und/oder unmittelbar messen, vorzugsweise direkt durch Kraftaufnehmer und/oder indirekt durch Erfassen der Antriebsdaten am Crimpwerkzeug.

Eine Weiterbildung des Verfahrens wird dadurch erreicht, dass die Crimpkraft von der Regeleinheit auf einen vorgegebenen maximalen, vom Material der Lichtleitfasern abhängigen Wert beschränkt wird. Je nach den Anforderungen an die Bauform des Abschlusses der Lichtleitfaserbündel ist erfindungsgemäß vorgesehen, dass die Crimphülse am Lichtleitfaserbündel vom Crimpwerkzeug zu im Querschnitt geschlossenen, kantengeometrisch geformten, mehrkantigen Abschlüssen stauchgeformt werden, vorzugsweise zu vier-, bis siebenkantigen Abschlüssen. Von der Erfindung ist des Weiteren ein Lichtleiter bestehend aus einem Lichtleitfaserbündel und einer Crimphülse umfasst, welcher endseitig einen nach dem vorgenannten Verfahren hergestellten Abschluss aufweist, wobei vorgesehen ist. dass der Abschluss als geschlossene, kantengeometrische Form ausgebildet ist, vorzugsweise vier-, bis siebenkantig. Dabei ist in vorteilhafter Weise weiter vorgesehen, dass der Abschluss außenseitig in Richtung der Längsachse und/oder im Umfang der Crimphülse wulstfreie ist. Erfindungsgemäß ist außerdem vorgesehen, dass die Faserenden des Lichtleitfaserbündels in der Crimphülse, vorzugsweise klebstoff und heißverschmelzungsfrei, fest gehalten sind.

Die Erfindung wird im Folgenden anhand der Zeichnung erläutert. Es zeigen
- Figur 1: den Endabschnitt eines lichtleitfaserbündels mit Crimphülse in Schnittansicht längs und senkrecht zur Hülsenlängsachse nach dem Stauchvorgang zu einem kreisförmigen Abschluss;
- Figur 2: den Endabschnitt eines Lichtleitfaserbündels mit Crimphülse in Schnittansicht längs und senkrecht zur Hölsenlängsachse nach dem Stauchvorgang zu einem sechskantigen Abschluss;

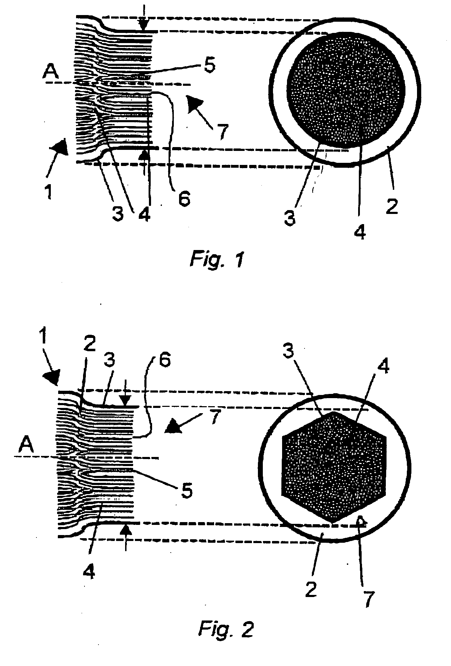

In Figur 1 ist der Endabschnitt 1 eines Lichtleitfaserbündels 2 mit Crimphülse 3 in Schnittansicht längs und senkrecht zur Hülsenlängsachse A nach dem Stauchvorgang dargestellt Das Lichtleitfaserbündel 2 besteht aus einer Vielzahl von Lichtleitfasern 4, welche an ihren Enden 5 Flächen 6 für den Lichtaustritt beziehungsweise den Lichteintritt aufweisen.

Der Endabschnitt 1 des Lichtleitfaserbündels 2 ist in der vorliegenden Zeichnung zu einem kreisrunden Abschluss 7 geformt worden. In Figur 2 ist analog zu Figur 1 der Endabschnitt 1 des Lichtleitfaserbündels 2 mit der Crimphülse 3 zu einem sechskantigen Abschluss 7 geformt worden.

Bei beiden Darstellungen ist der Abschluss 7 durch das erfindungsgemäße Verfahren dauerhaft und hochtemperaturfest mit der Crimphülse 3 erzeugt worden, ohne dass Klebstoffe oder Heißumform- bzw. Heißverschmelzprozesse zur Anwendung gekommen sind.

Dabei wird der Abschluss 7 des Lichtleitfaserbündels 2 endseitig in einer Crimphülse 3 zusammengefasst und die Crimphülse 3 mit dem Ende des Lichtleitfaserbündels 2 in eine Pressvorrichtung mit einem an die Endgeometrie des Lichtleitfaserbündels 2 angepassten Crimpwerkzeug eingeführt. Die Pressvorrichtung sowie das Crimpwerkzeug sind in der Zeichnung nicht dargestellt.

Die Crimphülse 3 wird erfindungsgemäß mit einer vorgegebenen Crimpkraft vom Crimpwerkzeug über den Endabschnitt 1 des Lichtleitfaserbündels 2 stauchgeformt und ist somit fest mit dem Lichtleitfaserbündel 2 verbunden. wobei die Lichtleitfasern 4 von der Crimphülse 3 zusammengehalten werden. Dabei ist vorgesehen, dass die Crimpkraft während des Stauchformvorganges in Abhängigkeit des Materials der Crimphülse 3 geregelt wird.

Hierzu wird der Stauchformvorgang mittels einer Regeleinheit weg-, zeit- und/oder kraftabhängig begonnen, durchgeführt und beendet. Die Crimpkraft ist zu Beginn des Stauchformvorganges über der erforderlichen Verformkraft einer leeren Crimphülse 3 und unterhalb der Bruchbelastung der einzelnen Lichtleitfasern 4. Erfindungsgemäß wird die Crimpkraft durch eine elektronische Regeleinheit ermittelt und eingestellt. Die elektronische Regeleinheit ist in der Zeichnung ebenfalls nicht dargestellt.

Die elektronische Regeleinheit ermittelt die aufzubringenden beziehungsweise die bereits erreichten Crimpkraft, welche an das Crimpwerkzeug vorgegeben wird. Die hierzu erforderlichen Parameter werden durch Kraftsensoren erfasst, wobei die Kraftsensoren die Parameter mittelbar beziehungsweise unmittelbar messen. Vorzugsweise werden die Parameter direkt durch Kraftaufnehmer beziehungsweise indirekt durch Erfassen der Antriebsdaten am Crimpwerkzeug erfasst. Die Messung der Crimpkraft kann dabei über die Erfassung des erforderlichen Stroms des Antriebsmotors oder Ähnliches erfolgen. Die Crimpkraft wird so von der Regeleinheit auf einen vorgegebenen maximalen, vom Material der Lichtleitfasern 4 abhängigen Wert beschränkt.

Die Crimphülse 3 wird mit dem Endabschnitt 1 des Lichtleitfaserbündels 2 vom Crimpwerkzeug im Querschnitt geschlossen beziehungsweise kantengeometrisch geformt. Im vorliegenden Fall der Fig. 1 sind die Abschlüsse kreisrund beziehungsweise in Fig. 2 sechskantig stauchgeformt worden, wobei der Stauchformvorgang durch die Regeleinheit weg-, zeit- beziehungsweise kraftabhängig durchgeführt und beendet worden ist. Die Abschlüsse 7 gemäß Fig. 1 und 2 sind außenseitig in Richtung der Längsachse A beziehungsweise im Umfang der Crimphülse 3 wulstfrei hergestellt, wobei die Enden der Lichtleitfasern 4 des Lichtleitfaserbündels 2 in der Crimphülse 3 klebstoff- und heißverschmelzungsfrei fest gehalten sind.

Zu Beginn der Umformung wird nach Montage der Lichtleitfasern 4 in die Crimphülse 3 der so zusammengefasste Endabschnitt 1 des Lichtleitfaserbündels in eine Crimpwerkzeug eingeführt. Dort wird die Crimphülse 3 durch das geometrisch an die gewünschte Endform des Abschlusses 7 angepasste Crimpwerkzeug in die vorgesehene Form umgeformt.

Zu Ende der Umformung wird der durch das Crimpwerkzeug bewirkte Stauchformvorgang bei Erreichen einer vorgegebenen Crimpkraft beendet. Die aktive Steuerung des Stauchformvorganges anhand der Crimpkraft ist wesentlich zur Erzielung der erfindungsgemäßen Vorteile.

Hierdurch kann in vorteilhafter Weise vor und während des Stauchformvorganges der Prozess Kontrolliert und beeinflusst werden, wodurch die Anzahl an Fehlversuchen zur Einstellung der Crimpvorrichtung erheblich reduziert werden kann und eine optimale Einstellung bereits vor dem Herstellungsprozess möglich ist, wodurch eine weitgehend fehlerfreie, serienmäßige Produktion von Lichtleitfaserbündein 2 gewährleistet wird.

Durch die Verwendung der von der Crimphülse 3 spezifischen Crimpkraft als entscheidende, den Stauchformvorgang steuernde Größe werden Toleranzen im Durchmesser des Glasfaserbündels automatisch ausgeglichen, die Prozesszeiten können minimiert werden und bleiben somit im Bereich von Sekunden für den Stauchformvorgang. Das Verfahren ist für weite Durchmesser der Endabschnitte 1 genauso geeignet wie für enge Durchmesser. Unterschiedliche Querschnitte oder Formen der Abschlüsse 7 können auch nach der Verformung noch nachträglich angeformt werden.

Mit dem erfindungsgemäßen Verfahren sind Lichlteitfaserbündel 2 in hoher Qualität herstellbar. Gegenüber bekannten Verfahren zeichnen sich die erfindungsgemäßen Lichtleitfaserbündel 2 durch eine große Lichtstärke aus, welche durch beschädigungsfreie Faserenden erreicht werden. Dabei ist das erfindungsgemäße Verfahren gegenüber bekannten Verfahren in Hinsicht auf die Kosten, die Zeit und den Energiebedarf erheblich günstiger.

## Patentansprüche

1. Verfahren zur Herstellung eines Abschlusses (7) eines Lichtleitfaserbündels (2), wobei das Lichtleitfaserbündel (2) endseitig in einer Crimphülse (3) zusammengefasst und die Crimphülse (3) mit dem Ende (5) des Lichtleitfaserbündels (2) in eine Pressvorrichtung mit einem an die Endgeometrie des Lichtleitfaserbündels (2) angepassten Crimpwerkzeug eingeführt wird,
**dadurch gekennzeichnet,**
**dass** die Crimphülse (3) mit einer vorgegebenen Crimpkraft vom Crimpwerkzeug über das Ende (5) des Lichtleitfaserbündels (2) stauchgeformt wird und dass die Crimpkraft während des Stauchformvorganges in Abhängigkeit des Materials der Crimphülse (3) geregelt wird.

2. Verfahren nach Anspruch 1,
**dadurch gekennzeichnet,**
**dass** der Stauchformvorgang mittels einer Regeleinheit weg-, zeit- und/oder kraftabhängig begonnen, durchgeführt und beendet wird.

3. Verfahren nach einem der Ansprüche 1 oder 2,
**dadurch gekennzeichnet,**
**dass** die Crimphülse (3) zu Beginn des Stauchformvorganges mit einer Crimpkraft über der erforderlichen Verformkraft einer leeren Crimphülse (3) und unterhalb der Bruchbelastung der einzelnen Lichtleitfasern (4) am Lichtleitfaserbündel (2) gestaucht wird.

4. Verfahren nach einem oder mehreren der Ansprüche 1 bis 3,
**dadurch gekennzeichnet,**
**dass** die aufzubringende Crimpkraft mit elektronischen, mechanischen, pneumatischen und/oder hydraulischen Mitteln ermittelt. eingestellt und geregelt wird.

5. Verfahren nach einem oder mehreren der Ansprache 1 bis 4,
**dadurch gekennzeichnet,**
**dass** die zur Ermittlung der aufzubringenden und/oder bereits erreichten Crimpkraft erforderlichen Parameter durch Kraftsensoren erfasst werden.

6. Verfahren nach einem oder mehreren der Ansprüche 1 bis 5,
**dadurch gekennzeichnet,**
**dass** die Kraftsensoren die Parameter mittelbar und/oder unmittelbar messen, vorzugsweise direkt durch Kraftaufnehmer und/oder indirekt durch Erfassen der Antriebsdaten am Crimpwerkzeug.

7. Verfahren nach einem oder mehreren der Ansprüche 1 bis 6,
**dadurch gekennzeichnet,**
**dass** die Crimpkraft von der Regeleinheit auf einen vorgegebenen maximalen, vom Material der Lichtleitfasern (4) abhängigen Wert beschränkt wird.

8. Verfahren nach einem oder mehreren der Ansprüche 1 bis 7,
**dadurch gekennzeichnet,**
**dass** die Crimphülse (3) am Lichtleitfaserbündel (2) vom Crimpwerkzeug zu im Querschnitt geschlossenen, kantengeometrisch geformten, mehrkantigen Abschlüssen (7) stauchgeformt werden. vorzugsweise zu vier-, bis siebenkantigen Abschlüssen (7).

9. Lichtleiter bestehend aus einem Lichtleitfaserbündel (2) und einer Crimphülse (3). welcher endseitig einen nach einem der vorgenannten Ansprüche hergestellten Abschluss (7) aufweist,
**dadurch gekennzeichnet,**
**dass** der Abschluss (7) als geschlossene, kantengeometrische Form ausgebildet ist, vorzugsweise vier-, bis siebenkantig.

10. Lichtleiter nach Anspruch 9,
**dadurch gekennzeichnet,**
**dass** der Abschluss (7) außenseitig in Richtung der Längsachse (A) und/oder im Umfang der Crimphülse (3) wulstfreie ist.

11. Lichtleiter nach einem der Ansprüche 9 und 10,
**dadurch gekennzeichnet,**
**dass** die Faserenden (5) des Lichtleitfaserbündels (2) in der Crimphülse (3), vorzugsweise klebstoff- und heißverschmelzungsfrei, fest gehalten sind.
